# EUROPEAN PATENT SPECIFICATION

(11) **EP 1 223 805 B1**
(45) Date of publication and mention of the grant of the patent: **18.02.2004**
(21) Application number: 00972780.1
(22) Date of filing: 17.10.2000
(51) Int. Cl.: A01N 1/02

(54) **METHOD FOR CRYOPRESERVATION OF TELEOSTEI SEMEN**
VERFAHREN ZUM CRYOPRÄSERVIEREN VON TELEOSTEI-SAMEN
PROCEDE DE CRYOPRESERVATION DE SPERME DE TELEOSTEI

(30) Priority: 20.10.1999 IT MI992200
(43) Date of publication of application: 24.07.2002
(73) Proprietor: Istituto Sperimentale Italiano " Lazzaro Spallanzani", 20133 Milan (IT)
(72) Inventor: ALEANDRI, Riccardo, I-00199 Rome (IT); GALLI, Andrea, I-24035 Curno (IT)
(74) Representative: Gervasi, Gemma, Dr.
(86) International application number: PCT/EP2000/010182
(87) International publication number: WO 2001/028326

(56) References cited:
- DATABASE AQUASCI [Online] P.CONGET ET AL.: "Cryopreservation of rainbow trout (Oncorhynchus mykiss) spermatozoa using programmable freezing" retrieved from STN-INTERNATIONAL, accession no. 97:12135 AQUASCI XP002160691 & AQUACULTURE, vol. 143, no. 3-4, 1996, pages 319-329,
- PIIRONEN J: "COMPOSITION AND CRYOPRESERVATION OF SPERM FROM SOME FINNISH FRESHWATER TELEOST FISH" FINNISH FISHERIES RESEARCH,FINNISH GAME AND FISHERIES RESEARCH INSTITUTE, HELSINKI,,FI, vol. 15, 1995, pages 65-86, XP000909913 ISSN: 0301-908X
- LAHNSTEINER F ET AL: "EFFICIENT METHOD FOR CRYOPRESERVATION OF TESTICULAR SPERM FROM THE NORTHERN PIKE, ESOX LUCIUS L" AQUACULTURE RESEARCH,BLACKWELL SCIENCE, OXFORD,,GB, vol. 29, no. 5, 1998, pages 341-347, XP000909933 ISSN: 1355-557X
- DATABASE BIOSIS [Online] BIOSCIENCES INFORMATION SERVICE, PHILADELPHIA, PA, US; F.LAHNSTEINER ET AL.: "Semen cryopreservation of salmonid fishes: Influence of handling parameters on the postthaw fertilization rate" retrieved from EPOQUE, accession no. PREV199699193159 XP002160692 & AQUACULTURE RESEARCH, vol. 27, 1996, pages 659-671,
- DATABASE BIOSIS [Online] BIOSCIENCES INFORMATION SERVICE, PHILADELPHIA, PA, US; G.MAISSE ET AL.: "Fish sperm and embryos cryopreservation" retrieved from EPOQUE, accession no. PREV199800178247 XP002160693 & PRODUCTIONS ANIMALES, vol. 11, January 1998 (1998-01), pages 57-65,
- DATABASE AQUASCI [Online] I.BABIAK ET AL.: "Computer-controlled freezing of rainbow trout Oncorhynchus mykiss (Walbaum) spermatozoa for routine programmes" retrieved from STN-INTERNATIONAL, accession no. 2000:10020 AQUASCI XP002160694 & AQUACULTURE RESEARCH, vol. 30, no. 9, September 1999 (1999-09), pages 707-710,

## Description

### Field of the invention

The field of the invention concems a cryopreservation method for Teleostei spermatozoa, for use in the zootechnical field.

### Background art

The methods of cryopreservation applied to different biological material (cells, tissues, gametes) have long been the subject of research at both industrial and scientific level also in the zootechnical field. The reasons for such interest, in the zootechnical field, is particularly aimed at the preservation of germinal cells because of the greater compactness of the genetic information compared to the entire animal. The usefulness of such methods relies on the possibility of favouring or' allowing particularly advantageous selections or cross-breeding, otherwise improbable due to environmental limits or geographical boundaries.

The advantages of cryopreservation rely on the:
- possibility of preserving the genetic material;
- possibility of analyses and comparison of genetic material, between various individuals of a species;
- facilitation of crossing-overs, compared to crossing-overs of animals;
- possibility to select the most suitable crossing according to i.e. environmental conditions;
- possibility to check the absence of contamination by infectious agents.
- the benefit of preserving reduced liquid volumes, compared to the maintenance of farmed animals.

Different methods are currently available for the cryopreservation of sperm derived from animal species of zootechnical interest, particularly fish of commercial interest A review is presented in: Maisse G. at al. INRA Prod. Anim. 1998, 11: 57-65.

Lahnsteiner et al. in Aquaculture, 1996, 144: 265-274 present a freezing method for the preservation of fish sperm. In this case, as well as in other methods known in the art, the main limitations lie in the non-standardization of the whole process necessary to guarantee large scale reproducibility for industrial applications.

In Conget P. et al. Aquaculture 1996, 143:319-329 is described a method for the cryopreservation of rainbow trout spermatozoa, which makes use of programmable freezing units.

Babiak et al. Aquaculture Research, 1999, 30:707-710, compares different protocols of cryopreservation based on the use of programmable freezing units.

### Summary of the invention

The invention provides a highly standardized process for the preservation of the seminal liquid of Teleostei, namely fishes, based on the definition and use of a reproducible freezing curve. The process is particularly useful in the genetic breeding and commercial farming of different fish species, preferably Salmonidae, most preferably *Salmo salar, Onchorynchus mykiss,* and may be usefully applied also to *Thymallus thymallus* and *Hucho hucho.*

The process according to the invention allows the cryopreservation on industrial scale, of sperm samples which maintain excellent fertilization efficiency after the freezing process and subsequent thawing.

### Detailed description of the invention

The present invention provides a reproducible freezing process for the cryopreservation of the semen of Teleostei species, preferably belonging to the family of Salmonidae, most preferably *Salmo salar* and *Onchorynchus mykiss,* usefully applied also to other Salmonidae species such as *Thymallus thymallus* and *Hucho hucho,* based on the definition and use of a freezing curve, corresponding to a cooling rate of the samples of 30°- 40°C/min, from +2 - +6°C to -110°C.

The freezing process comprises the following steps:
a) obtaining the semen from selected individuals;
b) dilution in a suitable diluent at semen/diluent ratios comprised between 1:3 and 1:5 (v/v);
c) equilibration of the diluted semen for less than 15 minutes, at a temperature comprised between +2 and +6 °C, preferably +4°C and aliquoting the diluted semen solution into 0.5 ml "paillettes";
d) freezing by temperature reduction (cooling) at a rate of 30°-40°C/min, from a temperature lower than +6°C to -110°C, preferably from + 4°C to -110 °C.

Suitable diluents used in step b) comprises commonly used isotonic buffered solution, with a pH ranging from 7.2 to 8.2, preferably 7.8, containing exogenous proteins in concentration ranging from 7.0% and_10.0%, preferably 8.5%. Exogenous proteins are a mixture of BSA (Bovine Serum Albumine) and egg yolk, in a preferred concentration range respectively of 1-2% and 6-8%, preferably 1.5% and 7%.

The buffers used are chosen among those known by the skilled artisan for this pH range. Suitable buffers are represented for example by Tris Hepes and phosphate. In a preferred embodiment the buffer is Hepes at a concentration comprised between 10-35 mM, preferably 20 mM.

Optionally the diluent comprises divalent cations. Preferred divalent cations are Ca⁺⁺ and Mg⁺⁺, such as CaCl₂ and MgSO₄ salts, in concentrations ranging from 0.1 to 10 mM (CaCl₂) for both salts. Preferably CaCl₂ is 1mM and MgSO₄ is 0.8 mM.

The diluent comprises a polysaccharide, which is preferably saccharose in a preferred concentration range of 0.25-0.75%, preferably 0.5% (w/v).

The osmolarity of the diluent ranges from 250 mosm to 350 mosm, and is preferably 300 mosm.

The diluent comprises cryoprotectants or preservatives. Substances used as cryoprotectants are known in the art and are commonly used in mammalian and prokaryotic cells freezing procedures. Among the cryoprotectants known in the art such as methanol, glycerol, DMSO, methanol is the most preferred. The concentration of the cryoprotectant is adjusted in relation to its cryoprotectant activity in aqueous solution and in relation to its citotoxicity. A preferred concentration of 6.5%-13.5% (v/v) methanol is used in the diluent, most preferably 10%. The concentration may be adjusted in a range comprised between 0.8 and 1.2% (v/v), preferably 1% when the cryoprotectant is glycerol, or to a concentration comprised between 3-7% (v/v), preferably 5% when the cryoprotectant agent is DMSO (dimethylsulphoxide).

In a preferred embodiment the diluent in step b) is an isotonic solution comprising: NaCl, Hepes at a concentration comprised between 10 mM and 35 mM, KCI at a concentration comprised between 20 mM and 60 mM, methanol at a concentration comprised between 6.5%-13.5%(v/v), Bovine Serum albumine (BSA) at a concentration comprised between 1%-2% (v/v), egg yolk at a concentration comprised between 6% and 8% (w/v), sucrose at a concentration comprised between 0.25% and 0.75%, and has a pH value comprised between 7.2 and 8.2, and an osmolarity comprised between 250-350 mOsm.

According to a even more preferred embodiment of the process of the invention, the diluent further comprises CaCl₂ at a concentration comprised between 0.5 mM and 1.5 mM and MgSO₄ at a concentration comprised between 0.5 mM and 1.2 mM.

An even more preferred diluent comprises: 20 mM Hepes, pH 7.8, 40 mM KCl, 1 mM CaCl₂ 0,8 mM MgSO₄, 10% Methanol, 103 mM NaCl, 1.5% Bovine serum albumine; 7% egg, yolk; 0.5% sucrose and has an osmolarity value of 300 mosm.

The process has been standardized to 0.5 ml paillettes, as indicated in step b) of the process. Such tubes are made by synthetic material, such as i.e. PETG or SURLINE such as the I.M.V. "paillettes" (L'Aigle Cedex, France) commonly used for the purpose of liquid specimen storage. Other tubes with similar dimensions and properties may be used with only routinary adjustments to the method of the invention, performed by the skilled artisan.

The cooling rate (freezing curve) in step d) of the process, is obtained with a programmable freezing unit, such as the Digitcool 5300® or other units with the same technical characteristics of programmation.

The process according to the invention has been successfully applied to the freezing of farmed fish semen belonging to the Salmonidae family. in particular, it is particularly advantageous for the freezing of rainbow trout *(Oncorhynchus mykiss)* and salmon *(Salmo salar)* semen and can be usefully applied also to other salmonidae species such as the grayling *(Thymallus thymallus)* and the Danube salmon *(Hucho hucho).*

The cryopreserved sperm obtainable by the process above described is derived from selected individuals, preferably it is genetically evaluated and ranked, and is preferably free from known pathogens (according to law 91/67/CEE). Moreover it is easily carried anywhere (in controlled temperature conditions), with no substantial geographical limit to the place of use; when used in *In vitro* fertilization (IVF) procedures, gives reproducible fertilization efficiencies; its use is advantageously extended i.e. to maintain the genetic heritage of wild fish, to realize inter or intra species crossing-overs, to perform selection schemes and for the breeding of genetically improved progenies.

The process of the invention can further comprise a freezing and thawing technique (freeze-thaw technique), which in addition to the previously characterized steps, further comprises the subsequent step of: e) warming the paillette and its frozen sperm content until the second is melted, at a temperature lower than 30°C, preferably comprised between 20 and 30°C, even more most preferably 25°C, for a time lower than 1 minute, preferably for a time comprised between 20 and 40 seconds, preferably 30 seconds. In a preferred embodiment, warming is performed in a water bath, thermostated at a temperature comprised between 24 and 26°C, preferably 25°C. The sperm, frozen and thawed according to this further embodiment of the invention, has a visual motility (VM) ranging from 10% to 40% as measured after sperm activation performed as well known in the art (Lahnsteiner et al. in Aquaculture, 1996,27: 659-671).

Briefly, to measure MV, the sperm sample (0.5 ml) is diluted 1:10 in a fertilization solution consisting of NaHCO₃ 60 mM, glycine 20 mM, theophylline 5 mM, Tris 50 mM, pH 9 and immediately incubated at 4°C in a Markler Chamber and microscopically observed with a 20x objective enlargement.

The thawed sperm obtainable by the process comprising the steps a), b), c) , d) and e) according to the invention is characterized by a visual motility not lower than 10%.

In a further embodiment the process of the invention provides a method for homologous *in vitro* fertilization of Teleostei eggs in which the semen cryopreserved by the use of the process of the invention according to steps a)-d), is thawed and used in a fertilization process, according to methods well known in the art.

in one of its further embodiments, the invention provides a process for *in vitro* fertilization (IVF) which is characterized by the use of the semen cryopreserved according to the process a)-d) of the above described process. In a preferred embodiment of the invention, the IVF further comprises the steps of:
f) diluting the thawed sperm in a range comprised between 1:1 and 1:5 with a fertilization solution comprising: Tris, at pH value comprised between 8.5 and 9.5, in a concentration comprised between 10 and 100 mM, even more preferably comprised between 40 mM and 60 mM, NaHCO₃ at a concentration comprised between 1 mM and 100 mM, even more preferably comprised between 50 mM and 70 mM, even more preferably 60 mM and further optionally comprising: theophilline at concentration comprised between 3 mM - and 7 mM, preferably 5 mM and glycine at a concentration comprised between 15 mM - and 25 mM, preferably 20 mM.
g) adding the diluted sperm to the eggs (preferably the diluted content of 1 0.5 ml "paillette" each 100-200 eggs), mixing gently;
h) incubating the mixture for a time comprised between 2' and 5', preferably 3', at a temperature comprised between 2°C and 6°C, preferably 4°C;
i) diluting the mixture with spring water to about 30-60 ml for 100-200 eggs, preferably 50ml/150 eggs
j) incubating the mixture at a temperature comprised between 4°C and 13°C for not less than 20 days.

The fertilization rate obtained by the process according to this further embodiment of the invention is standardized, ranging from 90% to 30%, preferably from 80% to 50% and is obtained on industrial scale.

The processes according to the different embodiments of the invention, are particularly advantageous in the zootechnical field, particularly in aquaculture for the standardized reproduction of farmed Teleostei and in particular for the breeding of genetically improved progenies, belonging to the family of Salmonidae, among which the *Oncorhyncus, Salmo, Thymallus* and *Hucho* genus are preferably chosen. Most preferred are the *Oncorhyncus* and *Salmo* genus.

The freezing and the In Vitro Fertilization processes, according to the invention, and the products thereof, are successfully applied to industrial and research processes to preserve the genetic heritage of these animal species or is used in selection schemes to design breedings resulting in individuals with qualities useful for the improvement of farmed species in any aquaculture condition (breeding of genetically improved progenies). Usually qualities such as the average daily gain (ADG), survival rate (SR), normal progeny rate (NPR), are positively selected for any aquaculture purposes. Other positively selected qualities are represented by the individual weight (IW), length (L), or brightness (B). Negative selection is performed for example on the number of abnormal progeny (NAF). Evaluation of the genetic component of such properties in the selected individuals and in their genetic material (the frozen semen) is performed by statistical analysis by methods well known in the art (Searle S. 1987. "Linear models for unbalanced data". John Wiley & Sons Inc. Edit. New York NY-USA; Van Vleck L.D. 1993 "Selection index and introduction to mixed model methods". CRC Press Inc. Edit, Boca Raton, FL-USA; Henderson C R. 1975 "Comparison of alternative sire evaluation methods". J Animal Science 41:760) for example by the so-called BLUP model, such as "sire-model", or the "animal model" or other linear models which allows the evaluation of the effects of the variables above defined with the aim of genetically ranking the value of frozen sperm. This value is taken into account in the design new breeding schemes to obtain selected progeny, for particular aquaculture adapted conditions or according to different requirements i.e. in the field of research or for market-oriented reasons.

In a further aspect the invention is related to the use of frozen semen of Teleostei as a powerful tool in selection programmes, where for selection programme is meant a breeding scheme where statistical procedures are applied in order to evaluate the genetic value of the individual fish and of its genetic material, namely gametes o sperm, for the traits of interest such as those mentioned above.

In a further embodiment the invention is related to the use of the frozen sperm obtainable accordingly to the process of the invention for selection programmes and breeding schemes.

The process according to all or particular embodiments of the invention is also useful for industrial and research processes requiring:
- the preservation of the genetic material of "wild" specimens, endangered by extreme environmental conditions (pollution etc.);
- the genetic analyses of specimens with special properties;
- the facilitation and the design of cross-breeding, with respect to the breeding of the entire animals;
- the selection of the most suitable breeding according to different environmental conditions;
- the safety of breeding by control of contamination by infectious agents;
the reduction of the maintenance costs of live specimens for reproduction.

The invention is detailed in the following experimental examples which do not have limitative purposes.

### EXPERIMENTAL PART

### Example 1: Collection and freezing of rainbow trout (Onchorhyncus mykiss) and salmon (Salmo salar) semen.

The sperm was collected by abdominal massage from previously sedated reproductive individuals belonging to the *Onchorhyncus mykiss* and *Salmo salar* species.

The volume of the liquid collected was established by micropipet; any contaminated samples were discarded.

Visual motility (VM) was ascertained by observation through a 20x phase microscope, after activation of the spermatozoa (carried out in a Makler cell) at 4°C, diluted 1:10 in a fertilization solution consisting of: 60 mM NaHCO₃; 20 mM glycine; 5 mM theophylline; 50 mM Tris, pH 9.

The freezing process was performed as follows: the semen was diluted at a semen:diluent ratio comprised between 1:3 to 1:5 (as indicated in the Table) with a buffer solution containing: 103 mM NaCl, 40mM KCl; 1mM CaCl₂, 0.8 mM MgSO₄, 20 mM Hepes, pH 7.8, 10% methanol, 1.5% bovine serum albumine; 7% egg yolk; 0.5% saccharose.

The diluted sperm sample was therefore aliquoted into 0.5 ml aliquots in "paillettes", equilibrated at 4°C for 10 min. and frozen in liquid nitrogen by cooling at a rate of 30°C/min, from +4°C to -110°C, by setting the freezing curve on the Digitcool 5300® programmable freezing unit. The "paillettes" were then immersed in liquid nitrogen.

The visual motility (VM) of the semen was ascertained after collection and after the freeze-thaw procedure performed by incubation of the "paillettes" in a thermostatic bath at 25°C for 30 sec.

The data related to the visual motility (VM) of the rainbow trout sperm collection (series T) are listed in table 1, while the data related to salmon sperm VM before and after treatment (cryopreservation according to the invention) are shown in table 2.

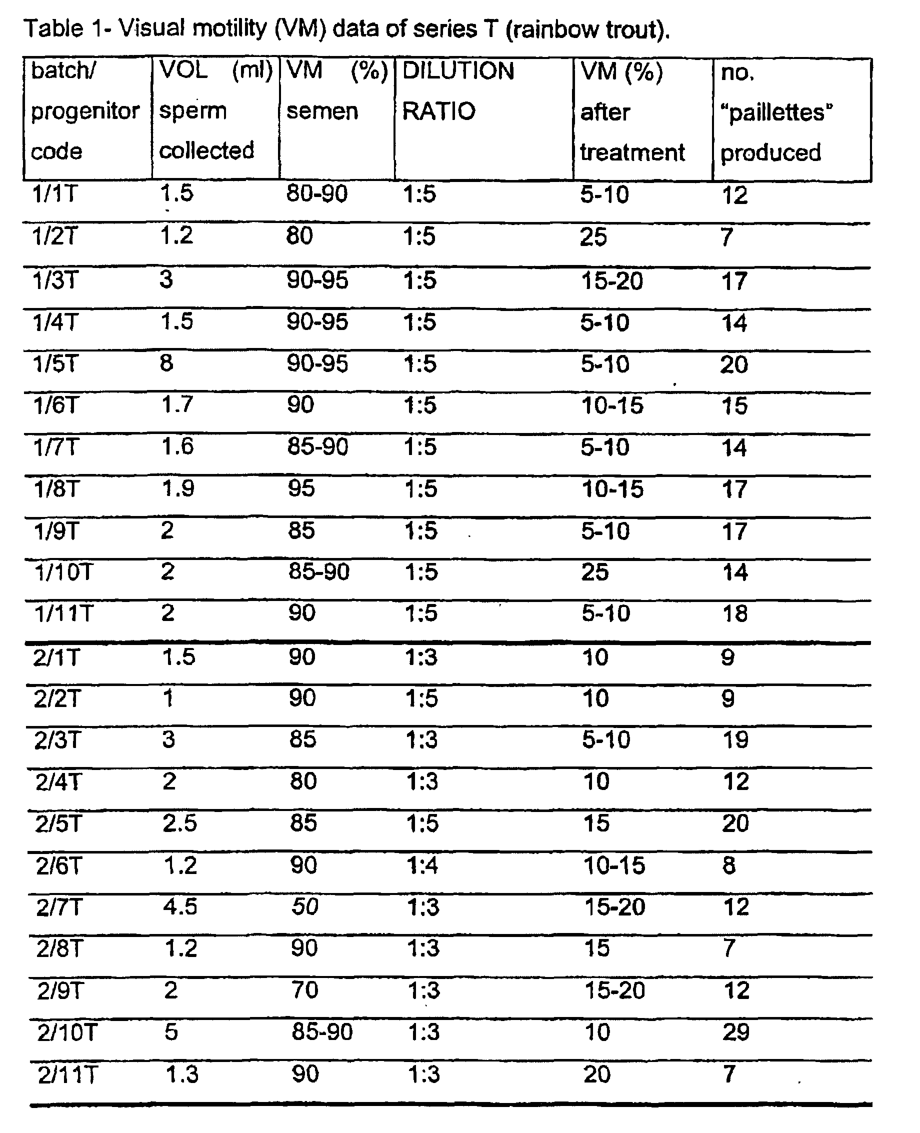

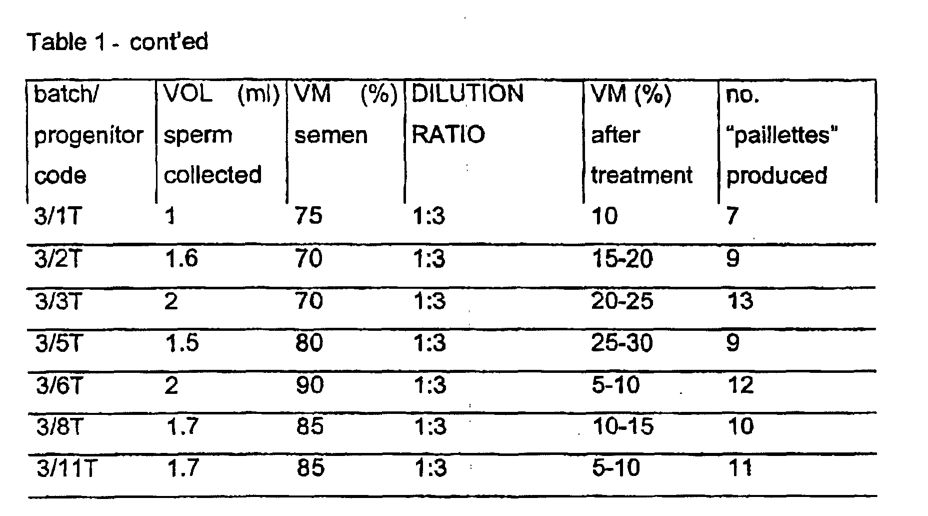

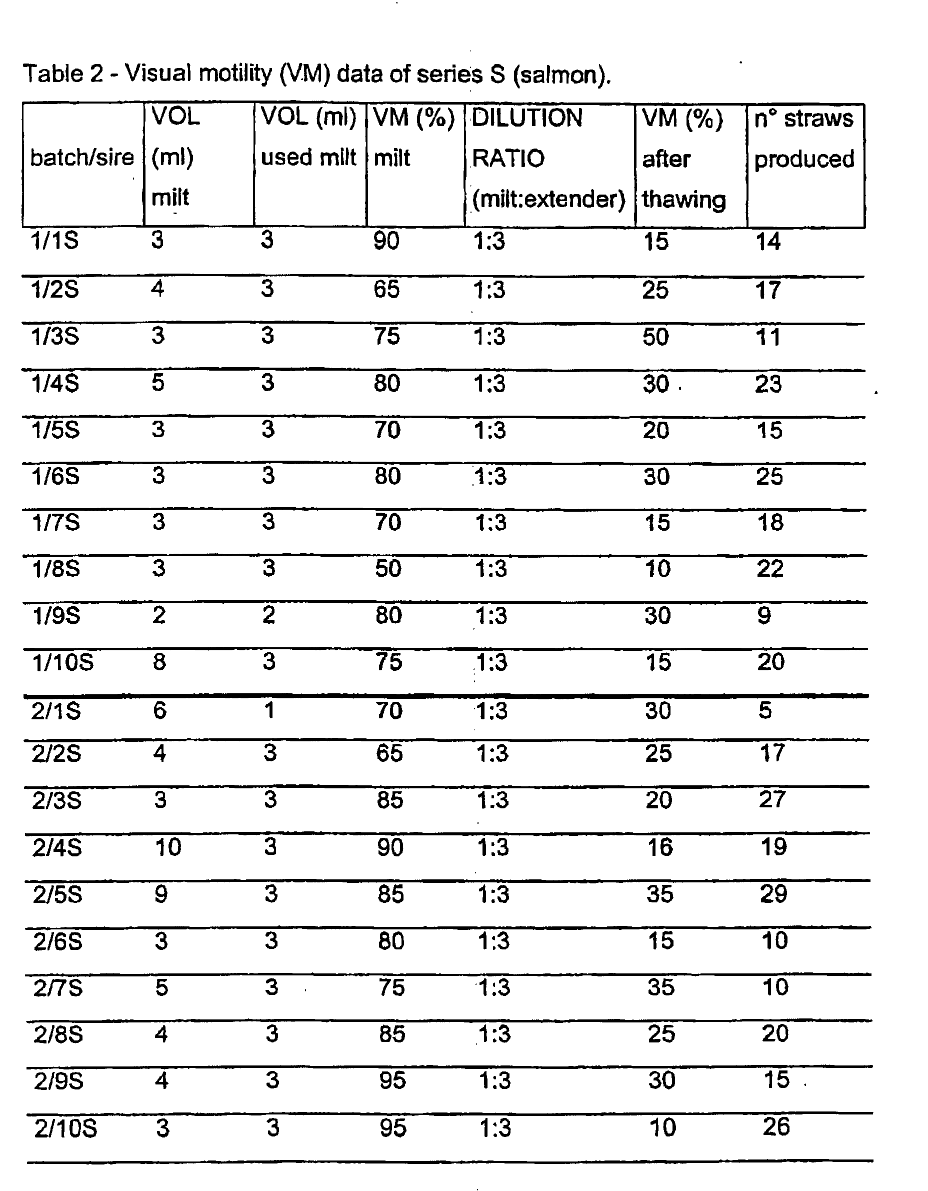

### Example 2: Determination of the fertilization efficiency of the T series samples.

30 sexually mature females, unbound by family ties, of similar average size to the males used for sperm collection, were sampled, labelled and kept in isolation up to the moment of the expression of the eggs.

10 females were used as egg donors for the fertilization test and 20 for the production of the progeny groups. For this purpose, the eggs obtained from all 20 females were collected in a single pool and divided into suitably sized aliquots for each experiment. Such females originated from fisheries officially declared free of infection or illness.

The frozen sperm samples were brought to the fishery for the fertilization of the eggs and the evaluation of on-site fertilization efficiency (progeny production). All sperm samples used had a visual motility, measured as described in the previous example, of not less than 10%.

Approximately 2000 eggs were used for the production of farmed progenies and approx. 150 for the fertilization test. In both cases, the eggs were transferred into a beaker and diluted 1:2 with the fertilization solution comprising of: 60 mM NaHCO₃; 20 mM glycine; 5mM theophylline; 50 mM Tris, pH 9.

The frozen sperm samples were thawed as described above, diluted with the fertilization solution and placed with the eggs (1 "paillette" containing 0.5 ml of sperm/150 eggs), and mixed gently.

After 3 minutes of incubation at 4°C, spring water was added (50 ml/150 eggs) the eggs were washed and incubated in flow hatcheries at a temperature of 11°C. The development of embryos was obtained in spring water and the fertilization success percentage was assessed after 30 days by measuring the percentage of embryos with eyes.

The data regarding the percentage of eggs fertilized after the freezing and thawing treatment are shown in Table 3.

**Table 3 -**

| Evaluation of the freezing process: results of the fertilization test. | | | |
|---|---|---|---|
| Male | | No. | % eggs fertilized |
| Series | Code | | |
| T | 1 | 3 | 65.0 |
| T | 2 | 3 | 74.0 |
| T | 3 | 3 | 72.0 |
| T | 4 | 3 | 48.0 |
| T | 5 | 3 | 48.0 |
| T | 6 | 3 | 78.0 |
| T | 7 | 3 | 59.0 |
| T | 8 | 3 | 70.0 |
| T | 9 | 3 | 71.0 |
| T | 10 | 3 | 60.0 |
| T | 11 | 3 | 68.0 |
| mean | | | 64.0 |
| n= number of replications of the experiment. | | | |

The experiments were repeated in farming condition in fisheries to evaluate reproducibility at the Industrial level in aquaculture.

Table 5 shows the results of the fertilization experiments performed at the industrial level.

The progeny groups derived from each mate were maintained in separate tanks (two tanks for each progeny group), up to the moment in which the fish were of sufficient size to allow labelling.

**Table 4 -**

| Aquafarm fertilization results | | | |
|---|---|---|---|
| Male | | Fertilization efficiencies | |
| | | Test 1 | Test 2 |
| Series | Code | Eggs fertilised (%) | Eggs fertilised (%) |
| T | 1 | 37.0 | 48.0 |
| T | 2 | 60.0 | 50.0 |
| T | 3 | 72.0 | 63.0 |
| T | 4 | 40.0 | 21.0 |
| T | 5 | 15.0 | 29.0 |
| T | 6 | 28.0 | 23.0 |
| T | 7 | 28.0 | 42.0 |
| T | 8 | 20.0 | 62.0 |
| T | 9 | 49.0 | 48.0 |
| T | 10 | 36.0 | 58.0 |
| T | 11 | 64.0 | 53.0 |
| TOTAL | | 40.0 | 48.0 |

The averages of the fertilization efficiencies obtained in aquafarm, presented in Table 4, are similar to those obtained from individual laboratory performed tests, presented in Table 3. These results show that for the rainbow trout the standardized protocol, obtained by the use of frozen semen, is well adapted to aquaculture in farm condition without any loss of efficiency.

### Example 3. Evaluation of the fertilization capacity of the S series semen after the freeze-thaw treatment (Salmo salar).

An experimental procedure similar to the one used in Example 1 and 2 was applied to *Salmo salar* eggs for the evaluation of the fertilization rate with frozen sperm.

10 sexually mature females, unbound by family ties, of similar average size to the males used for sperm collection, were sampled, labelled and kept in isolation up to the moment of the expression of the eggs.

5 females were used as egg donors for the fertilization test and 5 for the production of the progeny groups. For this purpose, the eggs obtained from all 5 females were collected in a single pool and divided into suitably sized aliquots for each experiment. Such females originated from fisheries officially declared free of infection or illness.

The frozen sperm samples were brought to the fishery for the fertilization of the eggs and the evaluation of on-site fertilization efficiency (progeny production). All sperm samples used had a visual motility, measured as described in the previous example, of not less than 10%.

Approximately 2000 eggs were used for the production of farmed progenies and approx. 150 for the fertilization test. In both cases, the eggs were transferred into a beaker and diluted 1:2 with the fertilization solution comprising of: 60 mM NaHCO3; 20 mM glycine; 5 mM theophylline; 50 mM Tris, pH 9.

The frozen sperm samples were defrosted as described above and placed with the eggs (1 "paillette" containing 0.5 ml of diluted sperm/150 eggs), and mixed gently.

After 3 minutes of incubation, spring water was added (50 ml/150 eggs) the eggs were washed and incubated in flow hatcheries at a temperature of 11°C. The development of embryos was obtained in spring water and the fertilization success percentage was assessed after 25 days by measuring the percentage of embryos with eyes.

The percentage of eggs fertilised after the freeze-thaw treatment are shown in Table 6, while fish farming (aquafarm condition) data are reported in Table 7.

**Table 6 -**

| Evaluation of the cryopreservation protocol: fertilization results | | | |
|---|---|---|---|
| Sire | | n | Total fertilized eggs(%) |
| List | Code | | |
| S | 1 | 3 | 73.0 |
| S | 2 | 3 | 36.0 |
| S | 3 | 3 | 59.0 |
| S | 4 | 3 | 45.0 |
| S | 5 | 3 | 43.0 |
| S | 6 | 3 | 39.0 |
| S | 7 | 3 | 53.0 |
| S | 8 | 3 | 38.0 |
| S | 9 | 3 | 51.0 |
| S | 10 | 3 | 70.0 |
| mean | | | 51.0 |
| n= number of replications in the experimental trial | | | |

**Table 7 -**

| Fertilization results obtained in aquafarm | | |
|---|---|---|
| Sire | | Fertilization |
| | | Trial 1 |
| List | Code | Fertilized eggs (%) |
| S | 1 | 37.0 |
| S | 2 | 45.0 |
| S | 3 | 51.0 |
| S | 4 | 65.0 |
| S | 5 | 24.0 |
| S | 6 | 50.0 |
| S | 7 | 40.0 |
| S | 8 | 42.0 |
| S | 9 | 50.0 |
| S | 10 | 30.0 |
| TOTAL | | 44.0 |

The averages of the fertilization efficiencies obtained in aquafarm, presented in Table 7, are similar to those obtained from individual laboratory performed tests, presented in Table 6. These results show that also in the case of salmon the standardized protocol, obtained by the use of frozen semen, is well adapted to aquaculture in farm condition without any loss of efficiency.

## Claims

1. A process for the cryopreservation of the semen of Teleostei belonging to the family of Salmonidae, comprising the following steps:
a) obtainment of semen from selected individuals;
b) dilution of the semen in a diluent at a semen/diluent volume ratio comprised between 1:3 and 1:5, wherein said diluent is an isotonic solution comprising: NaCl, Hepes at a concentration comprised between 10 mM and 35 mM, KCI at a concentration comprised between 20 mM and 60 mM, methanol at a concentration comprised between 6.5%-13.5% (v/v), Bovine Serum Albumine (BSA) at a concentration comprised between 1%-2% (v/v), egg yolk at a concentration comprised between 6% and 8% (w/v), sucrose at a concentration comprised between 0.25% and 0.75%, and has a pH value comprised between 7.2 and 8.2, and an osmolarity comprised between 250-350 mOsm;
c) equilibration of the diluted semen at a temperature comprised between 2°C and 6°C for a time lower than 15 minutes, and aliquoting of the diluted semen solution in 0.5 ml "paillettes";
d) freezing by cooling of the aliquots at a rate of 30°- 40°C/minute from 4°C to -110°C wherein said cooling is performed by a programmable freezing unit.

2. A process according to claim 1 wherein said Salmonidae are chosen among the species of: *Oncorhyncus -mykiss, Salmo salar, Thymallus thymallus* and *Hucho hucho.*

3. A process according to claim 2 wherein said species is *Oncorhyncus mykiss.*

4. A process according to claim 2 wherein said species is *Salmo salar.*

5. A process according to claim 1 wherein said diluent further comprises CaCl₂ at a concentration comprised between 0.5 mM and 1.5 mM and MgSO₄ at a concentration comprised between 0.5 mM and 1.2 mM.

6. A process according to claim 5 wherein the diluent comprises: 20 mM Hepes, pH 7.8, 40 mM KCl, 1 mM CaCl₂, 0.8 mM MgSO₄, 10% Methanol, 103 mM NaCl, 1.5% Bovine serum albumine; 7% egg yolk; 0.5% sucrose.

7. A process according to claims 1-6, further comprising the step of:
e) heating the frozen sperm, at a temperature lower than 30°C, for a time lower than 1'.

8. A process according to claim 7 wherein said temperature is 25°C and said time is 30".

9. A process for *in vitro* fertilization comprising the cryopreservation process according to anyone of claims 1-6.

10. A process for *in vitro* fertilization according to claim 9 which further comprises the steps of:
e) thawing the sperm by incubation in a water bath at a temperature comprised between 20°C and 30°C, for a time lower than 1 minute;
f) diluting the thawed sperm In a range ratio comprised between 1:1 and 1:5 (v/v) with a fertilization buffer;
g) adding the diluted sperm to Teleostei eggs with gentle mixing;
h) incubating the mixture for a time comprised between 2' and 5' and at a temperature comprised between +2°C and +6°C
i) diluting the mixture with fresh water to 30-60 ml for 100-200 eggs.
j) incubating the diluted mixture at a temperature comprised between 4°C and 13° C for not less than 20 days.

11. A process according to claim 10, where in the fertilization buffer is an aqueous isotonic solution comprising: Tris, at pH value comprised between 8.5 and 9.5, in a concentration comprised between 40 mM and 60 mM, NaHCO₃ at a concentration comprised between 50 mM and 70 mM, and optionally comprising: theophyilline at concentration comprised between 3 mM and 7 mM and glycine at a concentration comprised between 15 mM and 25 mM.

12. A process according to claim 11 wherein said fertilization buffer is an aqueous solution comprising: Tris 50 mM pH 9, theophyilline 5 mM, glycine 20 and NaHCO₃ 60mM.

13. A process according to claims 1-12 further comprising the evaluation of the genetic component of positively and negatively selected properties.

14. A process according to claim 13 wherein said evaluation is performed by statistical analysis.

15. A process for the preservation of the genetic heritage of selected animals **characterized in that** the cryopreservation process according to anyone of claims 1-6 is used.

16. A process for the design of breedings **characterized in that** the cryopreservation process according to anyone of claims 1-6 is used.

17. A process for the improvement of farmed species in aquaculture **characterized in that** the cryopreservation process according to anyone of claims 1-6 is used.

18. A process for the breeding of genetically improved species **characterized in that** the cryopreservation process according to anyone of claims 1-6 is used.

19. A process for evaluating the genetic value of individual fish **characterized in that** the cryopreservation process according to anyone of claims 1-6 is used.

## Patentansprüche

1. Verfahren zur Kryokonservierung von Samen von Teleostei,. folgende Schritte umfassend:
a) Gewinnung von Samen aus ausgewählten einzelnen Fischen;
b) Verdünnung des Samenmaterials mit einem Verdünnungsmittel in einem Volumenverhältnis von Samen/Verdünnungsmittel zwischen 1:3 und 1:5, wobei es sich bei dem genannten Verdünnungsmittel um eine isotonische Lösung handelt, beinhaltend NaCl, Hepes-Puffer in einer Konzentration zwischen 10 mM und 35 mM, KCI in einer Konzentration zwischen 20 mM und 60 mM, Methanol in einer Konzentration zwischen 6,5% -13,5% (v/v), Rinderserumalbumin (BSA) in einer Konzentration zwischen 1%-2% (v/v), Eigelb in einer Konzentration zwischen 6% und 8% (w/v), Saccharose in einer Konzentration zwischen 0,25% und 0,75%; der Puffer hat einen pH-Wert zwischen 7,2 und 8,2 und eine Osmolarität zwischen 250-350 mOsm;
c) Äquilibrierung des verdünnten Samenmaterials bei einer Temperatur zwischen 20 °C und 6 °C über einen Zeitraum von weniger als 15 Minuten und Aliquotierung der verdünnten Samenlösung in "Paillettes" von 0,5 ml;
d) Einfrieren durch Herunterkühlen der aliquotierten Mengen in Schritten von 30 °C - 40 °C /Minute ausgehend von 4 °C bis auf -110 °C, wobei das genannte Herunterkühlen mithilfe einer programmierbaren Gefriereinheit durchgeführt wird.

2. Verfahren gemäß Anspruch 1, wobei die genannten Lachsfische aus den Spezies *Oncorhyncus mykiss, Salmo salar, Thymallus thamallus* und *Hucho hucho* ausgesucht werden.

3. Verfahren gemäß Anspruch 2, wobei es sich bei der genannten Spezies um *Oncorhyncus mykiss* handelt.

4. Verfahren gemäß Anspruch 2, wobei es sich bei der genannten Spezies um *Salmo salar* handelt.

5. Verfahren gemäß Anspruch 1, wobei das genannte Verdünnungsmittel CaCl₂ in einer Konzentration zwischen 0,5 mM und 1,5 mM und MgSO₄ in einer Konzentration zwischen 0,5 mM und 1,2 mM umfasst.

6. Verfahren gemäß Anspruch 5, wobei das Verdünnungsmittel beinhaltet: 20 mM Hepes, pH 7,8, 40 mM KCI, 1mM CaCl₂, 0,8 mM MgSO₄, 10% Methanol, 103 mM NaCl, 1,5% Rinderserumalbumin, 7% Eigelb, 0,5% Saccharose.

7. Verfahren gemäß den Ansprüchen 1 bis 6, umfassend den Schritt:
e) Erwärmen des gefrorenen Spermas bei einer Temperatur unter 30 °C in weniger als 1 Minute.

8. Verfahren gemäß Anspruch 7, wobei die genannte Temperatur 25 °C beträgt und die Auftauzeit 30 Sekunden ist.

9. Verfahren Zur In-vito-Fertilisation gemäß Anspruch 9, umfassend den Kryokonservierungsprozess gemäß einem der Ansprüche 1 bis 6.

10. Verfahren zur In-vitro-Fertilisation gemäß Anspruch 9, umfassend die Schritte:
e) Auftauen des Spermas durch Inkubation in einem Wasserbad bei einer Temperatur zwischen 20 °C und 30 °C für einen Zeitraum unter 1 Minute;
f) Verdünnung des aufgetauten Spermas mit einem Fertilisationspuffer in einem Verhältnis zwischen 1:1 und 1:5 (v/v);
g) Zugabe des verdünnten Spermas zu Teleostei-Eiern unter sanftem Mischen;
h) Inkubation der Mischung über einen Zeitraum von 2 Minuten bis 5 Minutenund bei einer Temperatur zwischen +2 °C und +6 °C
i) Verdünnung der Mischung mit frischem Wasser auf 30 - 60 ml für 100-200 Eier.
j) Inkubation der verdünnten Mischung bei einer Temperatur zwischen 4 °C und 13 °C für weniger als 20 Tage.

11. Verfahren gemäß Anspruch 10, wobei in dem Fertilisationspuffer eine wässrige isotonische Lösung enthalten ist, umfassend: Tris mit einem pH-Wert zwischen 8,5 und 9,5 in einer Konzentration zwischen 40 mM und 60 mM, NaHCO₃ in einer Konzentration zwischen 50 mM und 70 mM und optional umfassend: Theophyllin in einer Konzentration zwischen 3 mM und 7 mM und Glycin in einer Konzentration zwischen 15 mM und 25 mM.

12. Verfahren gemäß Anspruch 11, wobei der genannte Fertilisationspuffer eine wässrige Lösung ist, umfassend: Tris 50 mM pH 9,0, Theophyllin 5 mM, Glycin 20 mM und NaHCO₃ 60 mM.

13. Verfahren gemäß den Ansprüchen 1 bis 12, weiterhin umfassend die Evaluierung der genetischen Komponente von positiv und negativ selektierten Eigenschaften.

14. Verfahren gemäß Anspruch 13, wobei die genannte Evaluierung mithilfe einer statistischen Analyse durchgeführt wird.

15. Verfahren zur Konservierung von genetischem Erbgut ausgewählter Tiere, **dadurch gekennzeichnet, dass** das Kryokonservierungsverfahren gemäß einem der Ansprüche 1 bis6 angewandt wird.

16. Verfahren für die Zucht, **dadurch gekennzeichnet, dass** das Kryokonservierungsverfahren gemäß einem der Ansprüche 1 bis 6 angewandt wird.

17. Verfahren zur Verbesserung von Zuchtfarm-Spezies in Aquakultur, **dadurch gekennzeichnet, dass** das Kryokonservierungsverfahren gemäß einem der Ansprüche 1 bis 6 angewandt wird.

18. Verfahren zur Zucht von genetisch verbesserten Spezies, **dadurch gekennzeichnet, dass** das Kryokonservierungsverfahren gemäß einem der Ansprüche 1 bis 6 angewandt wird.

19. Verfahren zur Evaluierung des genetischen Wertes einzelner Fische, **dadurch gekennzeichnet, dass** das Kryokonservierungsverfahren gemäß einem der Ansprüche 1 bis 6 angewandt wird.

## Revendications

1. Procédé pour la cryoconservation de la semence de Teleostei appartenant à la famille des Salmonidés, comprenant les étapes suivantes:
a) obtention de la semence d'individus sélectionnés;
b) dilution de la semence dans un diluant à un rapport en volume semence/diluant compris entre 1:3 et 1:5, où ledit diluant est une solution isotonique comprenant: NaCl, Hepes à une concentration comprise entre 10 mM et 35 mM, KCl à une concentration comprise entre 20 mM et 60 mM, du méthanol à une concentration comprise entre 6,5%-13,5%(v/v), de l'Albumine de Sérum Bovin (ASB) à une concentration comprise entre 1%-2% (v/v), du jaune d'oeuf à une concentration comprise entre 6% et 8% (p/v), du saccharose à une concentration comprise entre 0,25% et 0,75%, et a une valeur de pH comprise entre 7,2 et 8,2, et une osmolarité comprise entre 250-350 mOsm;
c) équilibrage de la semence diluée à une température comprise entre 2°C et 6°C pendant un temps plus faible que 15 minutes, et mise en aliquotes de la solution de la semence diluée en "paillettes" de 0,5 ml.
d) congélation par refroidissement des aliquotes à raison de 30°-40°C/minute de 4°C à -110°C où ledit refroidissement est accompli par une unité de congélation programmable.

2. Procédé selon la revendication 1 où lesdits Salmonidés sont choisis parmi les espèces de: *Oncorhyncus mykiss, Salmo salar, Thymallus thymallus et Hucho hucho.*

3. Procédé selon la revendication 2 où ladite espèce est *Oncorhyncus mykiss.*

4. Procédé selon la revendication 2 où ladite espèce est *Salmo salar.*

5. Procédé selon la revendication 1 où ledit diluant comprend de plus CaCl₂ à une concentration comprise entre 0,5 mM et 1,5 mM et MgSO₄ à une concentration comprise entre 0,5 mM et 1,2 mM.

6. Procédé selon la revendication 5 où le diluant comprend: Hepes 20 mM, pH 7,8, KCl 40 mM, CaCl₂ 1 mM, MgSO₄ 0,8 mM, 10% de Méthanol, NaCl 103 mM, 1,5% d'albumine de sérum Bovin, 7% de jaune d'oeuf, 0,5% de saccharose.

7. Procédé selon les revendications 1-6, comprenant de plus l'étape de:
e) chauffer le sperme congelé, à une température plus faible que 30°C, pendant un temps inférieur à 1'.

8. Procédé selon la revendication 7 où ladite température est de 25°C et ledit temps est de 30".

9. Procédé pour la fertilisation in vitro, comprenant le procédé de cryoconservation selon l'une quelconque des revendications 1-6.

10. Procédé pour la fertilisation *in vitro* selon la revendication 9 qui comprend de plus les étapes de:
e) dégeler le sperme par incubation dans un bain d'eau à une température comprise entre 20°C et 30°C pendant un temps plus faible que 1 minute;
f) diluer le sperme dégelé à un rapport de gamme compris entre 1:1 et 1:5 (v/v) avec un tampon de fertilisation;
g) ajouter le sperme dilué à des oeufs de Teleostei avec léger mélange;
h) soumettre le mélange à incubation pendant un temps compris entre 2' et 5' à une température comprise entre +2°C et +6°C.
i) diluer le mélange avec de l'eau fraîche à 30-60 ml pour 100-200 oeufs.
j) soumettre le mélange dilué à incubation à une température comprise entre 4°C et 13°C pendant pas moins de 20 jours.

11. Procédé selon la revendication 10, où, dans la fertilisation, le tampon est une solution aqueuse isotonique comprenant: Tris, à une valeur de pH comprise entre 8,5 et 9,5, à une concentration comprise entre 40 mM et 60 mM, NaHCO₃ à une concentration comprise entre 50 mM et 70 mM et comprenant facultativement: de la théophylline à une concentration comprise entre 3 mM et 7 mM et de la glycine à une concentration comprise entre 15 mM et 25 mM.

12. Procédé selon la revendication 11 où ledit tampon de fertilisation est une solution aqueuse comprenant: Tris 50 mM pH 9, théophylline 5 mM, glycine 20 et NaHCO₃ 60mM.

13. Procédé selon les revendications 1-12 comprenant de plus l'évaluation du composant génétique de propriétés positivement et négativement sélectionnées.

14. Procédé selon la revendication 13 où ladite évaluation est accomplie par analyse statistique.

15. Procédé pour la conservation de l'héritage génétique d'animaux sélectionnés **caractérisé en ce que** le procédé de cryoconservation selon l'une quelconque des revendications 1-6 est utilisé.

16. Procédé pour la conception d'élevages **caractérisé en ce que** le procédé de cryoconservation selon l'une quelconque des revendications 1-6 est utilisé.

17. Procédé pour l'amélioration d'espèces d'élevage en aquaculture **caractérisé en ce que** le procédé de cryoconservation selon l'une quelconque des revendications 1-6 est utilisé.

18. Procédé pour l'élevage d'espèces génétiquement améliorées **caractérisé en ce que** le procédé de cryoconservation selon l'une quelconque des revendications 1-6 est utilisé.

19. Procédé pour l'évaluation de la valeur génétique d'un poisson individuel **caractérisé en ce que** le procédé de cryoconservation selon l'une quelconque des revendications 1-6 est utilisé.
